# EUROPÄISCHE PATENTSCHRIFT

(11) **EP 4 059 079 B1**
(45) Veröffentlichungstag und Bekanntmachung des Hinweises auf die Patenterteilung: **12.08.2026**
(21) Anmeldenummer: 20803551.9
(22) Anmeldetag: 06.11.2020
(51) Int. Cl.: H01M 10/39, H01M 50/116, H01M 50/138, H01M 50/502

(54) **VERFAHREN ZUM HERSTELLEN EINER BATTERIE MIT EINER MEHRZAHL VON BATTERIEZELLEN UND BATTERIE DIE NACH DIESEM VERFAHREN HERGESTELLT IST**
METHOD FOR PRODUCING A BATTERY WITH A PLURALITY OF BATTERY CELLS AND BATTERY MANUFACTURED USING THIS PROCESS
PROCÉDÉ DE FABRICATION D'UNE BATTERIE DOTÉE D'UNE PLURALITÉ DE CELLULES DE BATTERIE ET BATTERIE FABRIQUÉE SELON CE PROCÉDÉ

(30) Priorität: 14.11.2019 DE 102019007902
(43) Veröffentlichungstag der Anmeldung: 21.09.2022
(73) Patentinhaber: Mercedes-Benz Group AG, 70372 Stuttgart (DE)
(72) Erfinder: TCHOUAHA TANKOUA, Aristide, 28219 Bremen (DE); BETZ, Philip, 75433 Maulbronn (DE); ROSSDEUTSCHER, Mario, 70619 Stuttgart (DE)
(74) Vertreter: Novagraaf Group
(86) Internationale Anmeldenummer: PCT/EP2020/081346
(87) Internationale Veröffentlichungsnummer: WO 2021/094224

(56) Entgegenhaltungen:
- DE-A1- 102011 121 485
- DE-A1- 102013 212 348
- US-A1- 2015 079 456
- US-B2- 8 460 818
- US-B2- 8 586 230

## Beschreibung

Die Erfindung betrifft ein Verfahren zum Herstellen einer Batterie mit einer Mehrzahl von Batteriezellen, wobei jeweilige Ableiter der Batteriezellen, durch welche elektrische Anschlüsse der jeweiligen Batteriezelle bereitgestellt sind, durch Schweißen mit einem Zellverbinder der Batterie elektrisch leitend verbunden sind. Des Weiteren betrifft die Erfindung eine Batterie welche nach einem solchen Verfahren hergestellt ist.

Die US 8 460 818 B2 beschreibt ein Batteriemodul mit einer Vielzahl wiederaufladbarer Batterien und einem Verbinder zum Verbinden eines ersten Anschlusses einer der Batterien mit einem zweiten Anschluss einer anderen der Batterien. Geschweißte Bereiche verbinden den Verbinder jeweils mit dem ersten Anschluss und mit dem zweiten Anschluss, wobei die geschweißten Bereiche durch Reibrührschweißen gebildet sind. In einer Ausführungsform ist das Verbindungselement als rechteckige Platte ausgebildet, welche die Anschlüsse bedeckt, wobei Vorsprünge der Anschlüsse in Vertiefungen eingeführt sind, welche an der Unterseite des Verbindungselements ausgebildet sind. Der Oberbegriff der Ansprüche 1 und 5 basiert auf der US 8 460 818 B2.

Die DE 10 2011 121 485 A1 beschreibt eine Batterie, bei welcher ungleichnamige Pole von benachbarten Batteriezellen mittels einer Hybrid-Stromschiene elektrisch in Reihe geschaltet sind. Ein erster Teilbereich der Hybrid-Stromschiene ist aus Kupfer gebildet und ein weiterer Teilbereich aus Aluminium. In einem Übergangsbereich sind die beiden Teilbereiche durch Rührreibschweißen stirnseitig miteinander verbunden.

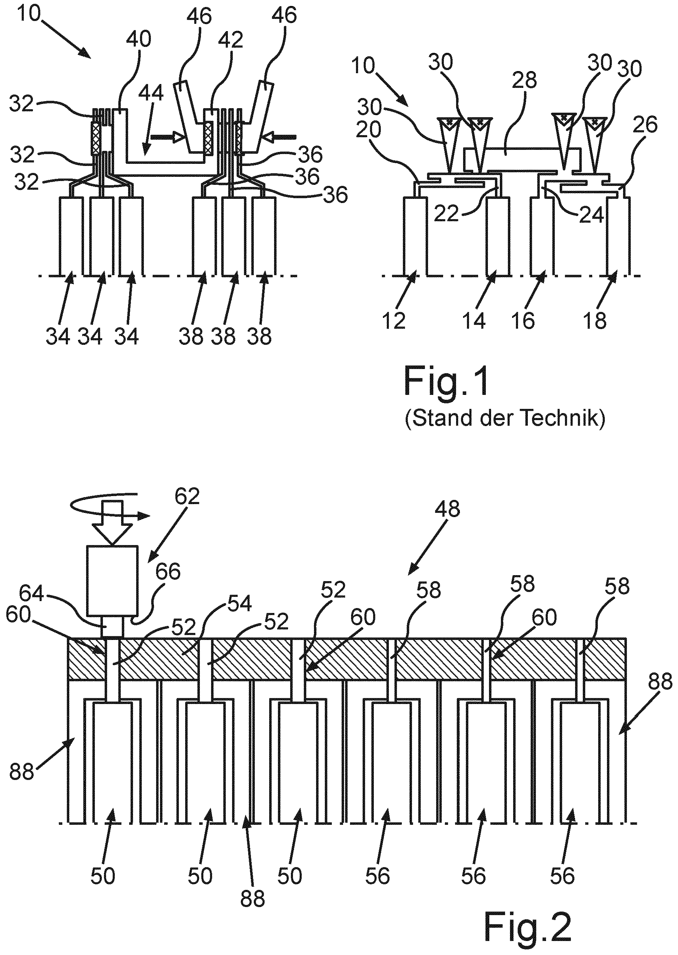

Das Verbinden der Ableiter von mehreren Batteriezellen einer Batterie mit einem Zellverbinder kann insbesondere vorgesehen sein, um die Batteriezellen elektrisch parallel zu schalten. Dies soll mit Bezug auf Fig. 1 erläutert werden.

Von einer Batterie 10 sind in einer in Fig. 1 rechten Darstellung Abschnitte beziehungsweise Ausschnitte von zwei ersten Batteriezellen 12, 14 und von zwei zweiten Batteriezellen 16, 18 gezeigt. Die ersten Batteriezellen 12, 14 sind parallel geschaltet. Hierfür sind Ableiter 20, 22 der ersten Batteriezellen 12, 14 elektrisch leitend miteinander verbunden. Diese Ableiter 20, 22 kontaktieren innerhalb der jeweiligen ersten Batteriezelle 12, 14 beispielsweise die negative Elektrode, bei Ausbildung der Batteriezellen 12, 14, 16, 18 als Lithium-Ionen-Zellen beispielsweise eine Graphitelektrode.

Auch die zweiten Batteriezellen 16, 18 weisen jeweiligen Ableiter 24, 26 auf, welche innerhalb der jeweiligen zweiten Batteriezelle 16, 18 die positive Elektrode kontaktieren. Bei Ausbildung der Batteriezellen 12, 14, 16, 18 als Lithium-Ionen-Zellen handelt es sich hierbei um diejenige Elektrode, welche Lithiumverbindungen enthält.

Die Ableiter 20, 22 der ersten Batteriezellen 12, 14 können aus Kupfer gebildet sein, während die Ableiter 24, 26 der zweiten Batteriezellen 16, 18 aus Aluminium gebildet sein können. Vorliegend werden die aus dem gleichen Kupfermaterial gebildeten Ableiter 20, 22 durch Schweißen miteinander verbunden. Die miteinander verschweißten Ableiter 20, 22 aus Kupfer werden gemäß Fig. 1 dann wiederum mit einem aus Aluminium gebildeten Zellverbinder 28 durch Schweißen verbunden. In analoger Weise werden die beispielsweise aus Aluminium gebildeten Ableiter 24, 26 der zweiten Batteriezellen 16, 18 miteinander verbunden und der Verbund der Ableiter 24, 26 wird ebenfalls mit dem Zellverbinder 28 durch Schweißen verbunden.

Auf diese Weise sind die beiden ersten Batteriezellen 12, 14 parallel geschaltet und es sind die beiden zweiten Batteriezellen 16, 18 parallel geschaltet. Über den Zellverbinder 28 sind die parallel geschalteten ersten Batteriezellen 12, 14 mit den parallel geschalteten zweiten Batteriezellen 16, 18 in der Batterie 10 wiederum in Reihe geschaltet.

Wie in der in Fig. 1 rechten Darstellung gezeigt, kann bei der parallelen Verschaltung der ersten Batteriezellen 12, 14 miteinander beziehungsweise der zweiten Batteriezellen 16, 18 miteinander ein Umbiegen und Aufeinanderstapeln der umgebogenen Abschnitte der jeweiligen Ableiter 20, 22, 24, 26 vorgesehen sein. Durch dieses Aufeinanderstapeln der Ableiter 20, 22 der ersten Batteriezellen 12, 14 einerseits und der Ableiter 24, 26 der zweiten Batteriezellen 16, 18 andererseits kommt es zu einem vergleichsweise großen Bauraumbedarf in die Stapelrichtung. Dadurch geht Bauraum für elektrochemisch aktives Material der jeweiligen Batteriezelle 12, 14, 16, 18 verloren.

Des Weiteren stellt das Umbiegen der Ableiter 20, 22, 24, 26 eine zusätzliche Herausforderung dar, und es bringt zusätzliche Arbeitsschritte im Fertigungsprozess mit sich. Bei dem Aufeinanderstapeln der abgebogenen Abschnitte der Zellverbinder 20, 22, 24, 26 ist es zudem erforderlich, eine im Wesentlichen spaltfreie Anlage der aufeinander gestapelten Bereiche der Zellverbinder 20, 22, 24, 26 zu realisieren. Auch dies geht mit zusätzlichen Anforderungen bei der Herstellung der Batterie 10 einher.

Darüber hinaus kann es bei einem schmelzflüssigen Verbinden der Ableiter 20, 22, 24, 26 mit dem Zellverbinder 28 etwa durch Laserstrahlschweißen zur Bildung von spröden und einen hohen elektrischen Widerstand aufweisenden intermetallischen Phasen kommen. Dies gilt dann, wenn Komponenten aus Aluminium mit Komponenten aus Kupfer verbunden werden. In Fig. 1 sind durch Spitzen aufweisende Symbole 30 die Stellen an den Ableitern 20, 22, 24, 26 beziehungsweise dem Zellverbinder 28 angegeben, an welchen durch das Laserstrahlschweißen elektrisch leitende Verbindungen hergestellt werden.

In der in Fig. 1 linken Darstellung ist eine weitere Batterie 10 schematisch und ausschnittsweise gezeigt, bei welcher aus Kupfer gebildete Ableiter 32 von ersten Batteriezellen 34 der Batterie 10 elektrisch leitend miteinander verbunden sind. In analoger Weise sind aus Aluminium gebildete Ableiter 36 von zweiten Batteriezellen 38 der Batterie 10 elektrisch leitend miteinander verbunden. Auch hier sind die aus Kupfer gebildeten Ableiter 32 nebeneinander und somit gestapelt angeordnet. In analoger Weise sind die aus Aluminium gebildeten Ableiter 36 aufeinander gestapelt angeordnet. Jedoch sind bei dieser Variante der Batterie 10 die aufeinander gestapelten Bereiche der jeweiligen Ableiter 32, 36 mit jeweiligen Schenkeln 40, 42 eines im Querschnitt U-förmigen Zellverbinders 44 der Batterie 10 durch Schweißen verbunden. Hierbei kann beispielsweise ein Ultraschallschweißverfahren zum Einsatz kommen. Ein entsprechendes Ultraschallwerkzeug 46 ist in Fig. 1 schematisch dargestellt.

Auch bei dieser in Fig. 1 gezeigten Batterie 10 führt das Vorsehen der miteinander in Anlage gebrachten Bereiche der Ableiter 32, 36 und das Vorsehen der abgebogenen Schenkel 40, 42 des Zellverbinders 44 zu einem vergleichsweise hohen Bauraumbedarf der Batterie 10 in die Erstreckungsrichtung der Schenkel 40, 42. Des Weiteren stellt auch hier das Umbiegen des Zellverbinders 44, also das Bereitstellen der U-Form des Zellverbinders 44, eine zusätzliche Herausforderung und einen zusätzlichen Arbeitsschritt im Fertigungsprozess der Batterie 10 dar.

Daher sind die mit Bezug auf Fig. 1 erläuterten Verfahren zum Verbinden von Ableitern jeweiliger Batteriezellen mit jeweiligen Zellverbindern nachteilig.

Die US 6 641 027 B2 beschreibt ein Verbinden von Ableitern einer als Pouchzelle ausgebildeten Batteriezelle mit Anschlussstücken aus Metall. Hierbei werden die Anschlussstücke um zungenförmige Fortsätze der Ableiter herumgebogen und dann die Anschlussstücke mit den zungenförmigen Fortsätzen verschweißt.

Auch bei dieser Batteriezelle stellt das Umbiegen der Ableiter einen unerwünschten Aufwand im Zuge der Herstellung der Batteriezelle dar.

Aufgabe der vorliegenden Erfindung ist es daher, eine Batterie der eingangs genannten Art zu schaffen, bei welcher auf besonders aufwandsarme und bauraumgünstige Art und Weise die Verbindung der Ableiter mit dem Zellverbinder erreicht ist, und ein entsprechend aufwandsarmes und in Bezug auf den Bauraum günstiges Verfahren zum Herstellen einer Batterie anzugeben.

Diese Aufgabe wird durch eine Batterie mit den Merkmalen des Patentanspruchs 5 und durch ein Verfahren mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei der erfindungsgemäß hergestellten Batterie mit einer Mehrzahl von Batteriezellen sind jeweilige Ableiter der Batteriezellen durch Schweißen mit einem Zellverbinder der Batterie elektrisch leitend verbunden. Durch die Ableiter sind elektrische Anschlüsse der jeweiligen Batteriezelle bereitgestellt. Der Zellverbinder weist jeweilige Einstecköffnungen auf, in welche jeweilige Endbereiche der Ableiter eingesteckt sind. Die Endbereiche der Ableiter sind mit dem Zellverbinder durch Rührreibschweißen verbunden.

Dem liegt die Erkenntnis zugrunde, dass aufgrund des Einsteckens der Endbereiche der Ableiter in die in dem Zellverbinder ausgebildeten Einstecköffnungen ein Umbiegen der Ableiter oder des Zellverbinders entfallen kann, also nicht vorgenommen zu werden braucht. Dementsprechend entfallen Arbeitsschritte bei der Fertigung der Batterie und die mit einem Biegeprozess für die Ableiter und/oder des Zellverbinders einhergehenden Herausforderungen. Folglich ist die Batterie auf besonders aufwandsarme Weise herstellbar.

Zudem geht nicht aufgrund eines Umbiegens der Ableiter und/oder des Zellverbinders Bauraum verloren. Einerseits kann so die Batterie besonders kompakt ausgebildet werden. Andererseits ist bei einem für die Batterie insgesamt zur Verfügung stehenden Bauraum einer bestimmten Größe mehr Platz für das elektrochemisch aktive Material der Batteriezellen vorhanden. Dadurch kann aus der Batterie ein besonders hoher Leistungsgewinn erzielt werden. Und die Batterie lässt sich insgesamt auf besonders bauraumgünstige beziehungsweise den Bauraum besonders gut ausnutzende Art und Weise bereitstellen.

Durch das Nutzen des Rührreibschweißens zum Verbinden der Endbereiche der Ableiter mit dem Zellverbinder entfällt zudem eine Bildung von spröden und einen hohen elektrischen Widerstand aufweisenden intermetallischen Phasen, wie sie bei einem schmelzflüssigen Verschweißen von Komponenten aus Kupfer mit Komponenten aus Aluminium auftreten können. Da beim Rührreibschweißen nämlich keine flüssigen oder dampfförmigen Phasen auftreten, sondern es sich um ein Festphasen-Fügeverfahren handelt, wird somit eine Schweißverbindung mit besonders guten elektrischen Eigenschaften erreicht. Aufgrund des als Fügeverfahren eingesetzten Rührreibschweißens ist auch eine sehr gute Prozessfähigkeit bei der Herstellung der Batterie gegeben.

Des Weiteren braucht kein Nullspalt vorgesehen zu werden, wie dies beim Aufeinanderstapeln von umgebogenen Bereichen von Ableitern von Batteriezellen der Fall wäre. Insbesondere ist die Herstellung der Batterie also dahin gehend besonders aufwandsarm, dass die mit dem Umbiegen und Stapeln einhergehende Arbeitsschritte und Herausforderungen entfallen. Und durch die Möglichkeit einer optimierten Nutzung des in der Batterie zur Verfügung stehenden Bauraums durch elektrochemisch aktives Material der jeweiligen Batteriezelle lässt sich mit der Batterie zudem eine hohe spezifische Leistung erreichen.

Bei der erfindungsgemäß hergestellten Batterie sind die Einstecköffnungen des Zellverbinders vor dem Verbinden der Endbereiche der Ableiter mit dem Zellverbinder als Durchtrittsöffnungen ausgebildet, in welche von einer ersten Seite des Zellverbinders her die jeweiligen Endbereiche der Ableiter eingesteckt sind. Beim Verbinden der Endbereiche der Ableiter mit dem Zellverbinder ist ein rotierender Stift eines für das Rührreibschweißen verwendbaren Werkzeugs von einer der ersten Seite gegenüberliegenden zweiten Seite des Zellverbinders her in die jeweilige Durchtrittsöffnung einbringbar. Auf diese Weise lässt sich einerseits das Einstecken der Endbereiche der Ableiter in die Einstecköffnung des Zellverbinders und andererseits das Ausbilden von jeweiligen, durch das Rührreibschweißen hergestellten Schweißnähten zum Verbinden der Endbereiche mit dem Zellverbinder besonders einfach bewerkstelligen. Des Weiteren ist so für das Werkzeug eine besonders gute Zugänglichkeit zu der herzustellenden Schweißnaht gegeben.

Bei der erfindungsgemäß hergestellten Batterie weisen sowohl die Endbereiche der Ableiter als auch die Einstecköffnungen nach Art von schmalen Rechtecken ausgebildete Querschnitte auf, wobei der rotierende Stift entlang der schlitzförmigen Einstecköffnung bewegbar ist, sodass über die gesamte Länge der Einstecköffnung durch das Rührreibschweißen eine Schweißnaht ausgebildet ist.

Die durch das Rührreibschweißen ausgebildete Naht oder Schweißnaht im Bereich der Verbindung des jeweiligen Endbereichs der Ableiter mit dem Zellverbinder lässt sich an dem Zellverbinder der Batterie aufgrund der Beschaffenheit der Naht von anderen Schweißnähten unterscheiden, welche durch ein schmelzflüssiges Schweißverfahren oder durch Ultraschallschweißen hergestellt sind. Somit ist an der Art der Ausbildung der Schweißnaht erkennbar, dass die Schweißnaht, welche für die Verbindung des Endbereichs des jeweiligen Ableiters mit dem Zellverbinder sorgt, durch das Rührreibschweißen hergestellt ist.

Vorzugsweise sind wenigstens zwei Batteriezellen der Batterie aufgrund des elektrisch leitenden Verbindens mit dem Zellverbinder parallel geschaltet. Denn insbesondere beim Parallelschalten von Batteriezellen treten üblicherweise die mit dem Umbiegen der Ableiter und/oder des Zellverbinders einhergehenden Probleme und der damit verbundene Bauraumverlust auf. Dies lässt sich vorliegend vermeiden, weil die Ableiter der miteinander elektrisch parallel geschalteten wenigstens zwei Batteriezellen in die jeweiligen Einstecköffnungen des Zellverbinders eingesteckt und durch das Rührreibschweißen mit dem Zellverbinder verschweißt sind.

Gruppen von parallel geschalteten Batteriezellen können aufgrund des elektrisch leitenden Verbindens mit dem Zellverbinder in Reihe geschaltet sein. Auf diese Weise lässt sich durch die Batterie eine höhere Nennspannung bereitstellen, als es eine einzelne Batteriezelle der Batterie vermag.

Vorzugsweise ist durch ein Gehäuse der jeweiligen Batteriezelle ein Widerlager gebildet, durch welches eine beim Rührreibschweißen auf den Zellverbinder aufgebrachte Kraft zumindest teilweise abstützbar ist. Auf diese Weise kann auf ein Vorsehen anderweitiger Stützvorrichtungen zum Abstützten der Kraft besonders weitgehend verzichtet werden. Dies vereinfacht die Herstellung der Batterie.

Eine Eintrittstiefe zumindest eines der Endbereiche in die diesem Endbereich zugeordnete Einstecköffnung kann geringer sein als eine Dicke des Zellverbinders in Richtung der Eintrittstiefe. Mit anderen Worten braucht also der Endbereich des Ableiters nicht so weit in die Einstecköffnung des Zellverbinders eingeführt zu werden, dass der Endbereich mit einer Oberfläche des Zellverbinders bündig abschließt oder sogar geringfügig über diese Oberfläche hinaussteht. Vielmehr lässt sich die Verbindung der Endbereiche der Ableiter mit dem Zellverbinder auch dann prozesssicher und einfach realisieren, wenn der Endbereich des Ableiters die Einstecköffnung nur zu einem Teil in Richtung der Eintrittstiefe ausfüllt. Hierbei kann insbesondere durch beim Rührreibschweißen plastifiziertes Material des Zellverbinders ein Verkleben der Materialien der Endbereiche und des Zellverbinders miteinander erreicht werden.

Zudem kann Fertigungstoleranzen beim Herstellen des Zellverbinders und/oder der Ableiter besonders gut Rechnung getragen werden, wenn die Eintrittstiefe geringer ist als die Dicke des Zellverbinders.

Bei dem erfindungsgemäßen Verfahren zum Herstellen einer Batterie mit einer Mehrzahl von Batteriezellen werden jeweilige Ableiter der Batteriezellen, durch welche elektrische Anschlüsse der jeweiligen Batteriezelle bereitgestellt werden, durch Schweißen mit einem Zellverbinder der Batterie elektrisch leitend verbunden. Der Zellverbinder weist jeweilige Einstecköffnungen auf, in welche jeweilige Endbereiche der Ableiter eingesteckt werden. Die Endbereiche der Ableiter werden mit dem Zellverbinder durch Rührreibschweißen verbunden. Die Einstecköffnungen des Zellverbinders sind als Durchtrittsöffnungen ausgebildet, in welche von einer ersten Seite des Zellverbinders her die jeweiligen Endbereiche der Ableiter eingesteckt werden, wobei beim Verbinden der Endbereiche der Ableiter mit dem Zellverbinder ein rotierender Stift eines für das Rührreibschweißen verwendeten Werkzeugs von einer der ersten Seite gegenüberliegenden zweiten Seite des Zellverbinders her in die jeweilige Durchtrittsöffnung eingebracht wird. Hierbei weisen sowohl die Endbereiche der Ableiter als auch die Einstecköffnungen nach Art von schmalen Rechtecken ausgebildete Querschnitte auf. Der rotierende Stift wird entlang der schlitzförmigen Einstecköffnung bewegt, sodass über die gesamte Länge der Einstecköffnung durch das Rührreibschweißen eine Schweißnaht ausgebildet wird. Ein derartiges Verfahren eignet sich insbesondere zum elektrischen Parallelschalten von Batteriezellen der Batterie, ohne dass hierfür die Ableiter oder der Zellverbinder umgebogen zu werden brauchen. Insbesondere werden also die Ableiter nicht überlappend aufeinander gestapelt. Vielmehr werden die Ableiter in die nach Art von Schlitzen ausgebildeten Einstecköffnungen des Zellverbinders eingeführt oder eingesteckt und dann durch das Rührreibschweißen mit dem Zellverbinder verbunden.

Ein derartiges Verfahren ist besonders aufwandsarm und führt zu einer besonders bauraumsparenden beziehungsweise einen zur Verfügung stehenden Bauraum besonders gut ausnutzenden Fertigung der Batterie.

Vorzugsweise wird während des Rührreibschweißens der rotierende Stift des für das Rührreibschweißen verwendeten Werkzeugs in den Endbereich des jeweiligen Ableiters eingeführt, bis eine Werkzeugschulter des Werkzeugs an einer Oberseite des Zellverbinders anliegt. Durch die Reibung zwischen der Werkzeugschulter und dem Endbereich des Ableiters beziehungsweise durch die Reibung zwischen der Werkzeugschulter und dem Zellverbinder werden die zu fügenden Fügepartner, also der Endbereich des Ableiters und der Zellverbinder, im Bereich der Einstecköffnung bis kurz unter den Schmelzpunkt erwärmt. Dadurch erfolgt eine Plastifizierung der Werkstoffe des Ableiters und des Zellverbinders, sodass eine Vermischung derselben in der Fügezone die Folge ist. Wird dann der rotierende Stift entlang der schlitzförmigen Einstecköffnung bewegt, so wird über die gesamte Länge der Einstecköffnung durch das Rührreibschweißen die entsprechende Schweißnaht ausgebildet. Auf diese Weise lässt sich eine besonders innige Verbindung des jeweiligen Endbereichs des Ableiters mit dem Zellverbinder realisieren.

Dies gilt in analoger Weise, wenn zusätzlich oder alternativ während des Rührreibschweißens ein rotierender Stift eines für das Rührreibschweißen verwendeten Werkzeugs in einen Spalt eingeführt wird, welcher zwischen dem Endbereich des jeweiligen Ableiters und einer die Einstecköffnung begrenzenden Wandung des Zellverbinders ausgebildet ist. Mit anderen Worten kann der Endbereich des Zellverbinders mit einem gewissen Spiel in die Einstecköffnung eingeführt werden. In den aufgrund dieses Spiels ausgebildeten schmalen Spalt zwischen der Wandung des Zellverbinders und dem Endbereich des jeweiligen Ableiters lässt sich dann der rotierende Stift sehr einfach einführen und dann, insbesondere entlang des Spalts, in die Vorschubrichtung vorbewegen, um durch das Rührreibschweißen die Schweißnaht herzustellen. Auch auf diese Weise lässt sich folglich eine sehr innige Verbindung des Endbereichs des jeweiligen Ableiters mit dem Zellverbinder erreichen.

Vorzugsweise ist eine Eintauchtiefe des rotierenden Stifts in die Einstecköffnung geringer als eine Dicke des Zellverbinders in Richtung der Eintauchtiefe. Auf diese Weise wird verhindert, dass durch den rotierenden Stift Komponenten Schaden nehmen können, an welchen der Zellverbinder während des Rührreibschweißens anliegt. Bei diesen Komponenten kann es sich insbesondere um Komponenten der jeweiligen Batteriezelle oder um lediglich während des Rührreibschweißens verwendete, nicht zu der Batterie gehörende Bauteile handeln.

Vorzugsweise beträgt die Eintauchtiefe des rotierenden Stifts mehr als 90 Prozent der Dicke des Zellverbinders. Denn so lässt sich eine besonders großflächige Verbindung der Endbereiche der Ableiter mit dem Zellverbinder realisieren. Dies ist im Hinblick auf einen möglichst geringen elektrischen Übergangswiderstand zwischen dem Ableiter und dem Zellverbinder im Bereich der Schweißverbindung vorteilhaft.

Insbesondere kann die Eintauchtiefe etwa 95 Prozent der Dicke des Zellverbinders in Richtung der Eintauchtiefe betragen. So lassen sich die vorstehend genannten Vorteile in besonders weitgehendem Maße realisieren.

Vorzugsweise wird mittels eines für das Rührreibschweißen verwendeten Werkzeugs eine Kraft in einem Bereich auf den Zellverbinder aufgebracht, in welchem ein den Zellverbinder kontaktierendes Gehäuse der Batteriezelle stabiler ausgebildet ist als in einem an diesen Bereich angrenzenden Bereich des Gehäuses. Es kann also gezielt das Werkzeug dort angesetzt werden, wo das Gehäuse der Batteriezelle die beim Rührreibschweißen auf den Zellverbinder aufgebrachte Kraft besonders weitgehend abzustützen vermag. Beispielsweise kann ein derartiger, stabiler Bereich des Gehäuses der Batteriezelle durch eine Seitenwand des Gehäuses der Batteriezelle gebildet sein.

Schließlich hat es sich als vorteilhaft gezeigt, wenn während des Rührreibschweißens zwischen den Zellverbinder und ein Gehäuse der Batteriezelle eine Stützeinrichtung eingebracht wird, welche eine beim Rührreibschweißen auf den Zellverbinder aufgebrachte Kraft zumindest teilweise abstützt. Eine derartige, nach Art eines Ambosses ausgebildete Stützeinrichtung kann also vorübergehend zwischen dem Zellverbinder und dem Gehäuse der jeweiligen Batteriezelle angeordnet werden, während durch das Rührreibschweißen die Endbereiche des jeweiligen Ableiters mit dem Zellverbinder verbunden werden. So lässt sich eine Beschädigung der Batteriezellen aufgrund des beim Rührreibschweißen aufgebrachten Drucks besonders weitgehend vermeiden.

Die für die erfindungsgemäße Batterie beschriebenen Vorteile und bevorzugten Ausführungsformen gelten auch für das erfindungsgemäße Verfahren und umgekehrt.

Weitere Vorteile, Merkmale und Einzelheiten der Erfindung ergeben sich aus der nachfolgenden Beschreibung bevorzugter Ausführungsbeispiele sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: schematisch dem Stand der Technik gemäße Möglichkeiten der Parallelschaltung von Batteriezellen einer Batterie, bei welchen ein Zellverbinder beziehungsweise Ableiter der jeweiligen Batteriezellen umgebogen werden;
- Fig. 2: in einer schematischen Schnittansicht ein Verschweißen von in Einstecköffnungen eines Zellverbinders eingesteckten Ableitern jeweiliger Batteriezellen einer Batterie mittels eines zum Rührreibschweißen ausgebildeten Werkzeugs;
- Fig. 3: in einer schematischen Draufsicht den Zellverbinder gemäß Fig. 2, wobei zwischen einem der Ableiter und dem Zellverbinder bereits eine Schweißnaht durch das Rührreibschweißen hergestellt ist;
- Fig. 4: in einer Seitenansicht und in einer Draufsicht den Schritt des Eintauchens eines Stifts des Werkzeugs in den Ableiter beziehungsweise in einen Spalt zwischen dem Ableiter und einer Wandung des Zellverbinders;
- Fig. 5: in einer Seitenansicht und in einer Draufsicht das Verfahren des Stifts entlang der Einstecköffnung des Zellverbinders, wobei eine Werkzeugschulter des Werkzeugs an einer Oberseite des Zellverbinders anliegt;
- Fig. 6: in einer Seitenansicht und in einer Draufsicht das Ausfahren des Werkzeugs aus der Einstecköffnung nach dem Herstellen der Naht durch das Rührreibschweißen;
- Fig. 7: in einer schematischen Schnittansicht die Verbindung der Endbereiche der Ableiter mit dem Zellverbinder durch jeweilige Schweißnähte, welche mittels des für das Rührreibschweißen eingesetzten Werkzeugs gebildet wurden; und
- Fig. 8: schematisch einen Gewinn an Bauraum in Erstreckungsrichtung der Ableiter aufgrund der Verwendung des die Einstecköffnung aufweisenden Zellverbinders und des Rührreibschweißens im Vergleich zu einem Verfahren, bei welchem die Ableiter umgebogen, aufeinander gestapelt und dann mit dem Zellverbinder verschweißt werden.

In den Fig. sind gleiche oder funktionsgleiche Elemente mit gleichen Bezugszeichen versehen.

Im Hinblick auf die mit Bezug auf Fig. 1 erläuterten Sachverhalte wird auf den einleitenden Teil der vorliegenden Beschreibung verwiesen.

In Fig. 2 ist ausschnittsweise und schematisch eine Batterie 48 mit einer ersten Gruppe von Batteriezellen 50 gezeigt, welche elektrisch parallel geschaltet sind. Diese Batteriezellen 50 weisen jeweilige Ableiter 52 auf, durch welche elektrische Anschlüsse der jeweiligen Batteriezelle 50 bereitgestellt sind. Beispielsweise können diese Ableiter 52 als elektrische Anschlüsse in Form von Pluspolen der ausschnittsweise gezeigten Batteriezellen 50 ausgebildet sein. Endbereiche der Ableiter 52 sind mit einem Zellverbinder 54 der Batterie 48 verbunden. Auf diese Weise sind die Batteriezellen 50 elektrisch parallel geschaltet.

Des Weiteren weist die Batterie 48 eine zweite Gruppe von Batteriezellen 56 auf, welche ebenfalls elektrisch parallel geschaltet sind. Diese Batteriezellen weisen ebenfalls jeweilige Ableiter 58 auf, durch welche jeweilige elektrische Anschlüsse der Batteriezellen 56 bereitgestellt sind. Beispielsweise sind durch die Ableiter 58 jeweilige Minuspole der Batteriezellen 56 gebildet. Auch Endbereiche dieser Ableiter 58 sind mit dem Zellverbinder 54 elektrisch leitend verbunden. Vorliegend ist also über den Zellverbinder 54 die Gruppe der elektrisch parallel geschalteten Batteriezellen 50 mit der Gruppe der elektrisch parallel geschalteten Batteriezellen 56 in Reihe geschaltet.

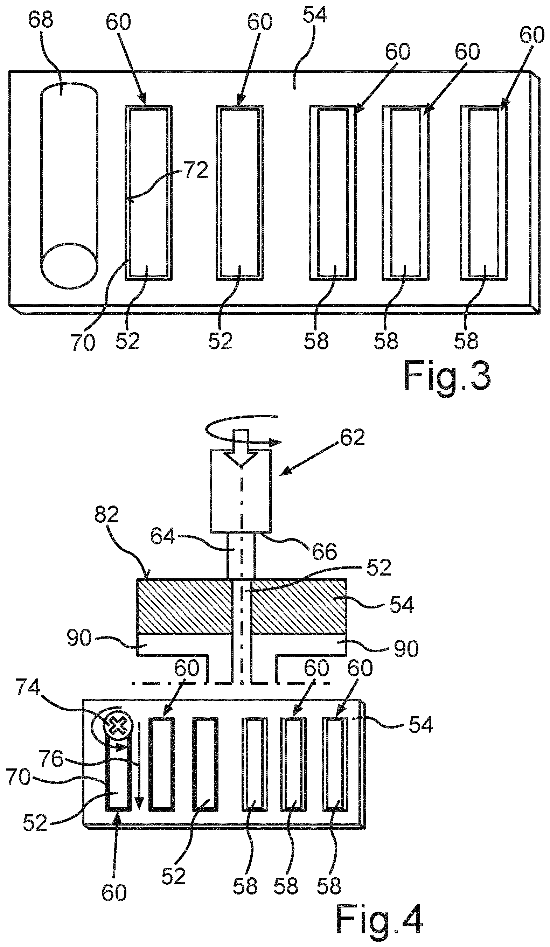

Wie aus Fig. 2 ersichtlich ist, brauchen jedoch weder die Ableiter 52, 58 noch der Zellverbinder 54 gebogen beziehungsweise umgebogen zu werden, um eine Schweißverbindung zwischen den Endbereichen der Ableiter 52, 58 und dem Zellverbinder 54 zu realisieren. Vielmehr sind die Endbereiche der Ableiter 52, 58 in nach Art von Schlitzen ausgebildete Einstecköffnungen 60 eingesteckt, von welchen in Fig. 2 lediglich einige mit einem Bezugszeichen versehen sind. Die in dem Zellverbinder 54 ausgebildeten Einstecköffnungen 60 sind auch in der Draufsicht auf den Zellverbinder 54 in Fig. 3 gut erkennbar. Dementsprechend weisen vorliegend sowohl die Endbereiche der Ableiter 52, 58 als auch die Einstecköffnungen 60 im Wesentlichen nach Art von schmalen Rechtecken ausgebildete Querschnitte auf.

Zum elektrisch leitenden Verbinden der Endbereiche der Ableiter 52, 58 mit dem Zellverbinder 54 kommt vorliegend das Rührreibschweißen zum Einsatz. Ein entsprechendes, zum Durchführen des Rührreibschweißens geeignetes Werkzeug 62 ist in Fig. 2 schematisch gezeigt.

Das Werkzeug 62 weist einen Stift 64 auf, welcher über eine Werkzeugschulter 66 des Werkzeugs 62 übersteht. Beim Rührreibschweißen wird der rotierende Stift 64 üblicherweise in einen Fügespalt zwischen zwei Fügepartnern eingeführt. Dies geschieht so lange, bis die Werkzeugschulter 66 an einer Oberfläche der Fügepartner anliegt. Das die Werkzeugschulter 66 aufweisende Werkzeug 62 und somit auch der Stift 64 rotieren hierbei weiter, sodass über das sich drehende Werkzeug 62 Wärme an der Eintauchstelle in die Fügepartner eingebracht wird. Hierbei sorgt die Reibung zwischen der Werkzeugschulter 66 und der Oberfläche, an welcher die Werkzeugschulter 66 anliegt, für das Erwärmen der miteinander zu verbindenden Werkstoffe und somit für ein Plastifizieren der durch das Rührreibschweißen miteinander zu verbindenden Fügepartner.

Anschließend wird der rotierende Stift 64 und somit das zusammen mit dem Stift 64 rotierende Werkzeug 62 entlang des Fügespalts bewegt und so die komplette Schweißnaht 68 hergestellt (vergleiche Fig. 3). In Fig. 3 ist eine Schweißnaht 68 schematisch gezeigt, welche im Bereich eines der Ableiter 52 ausgebildet ist, welcher in eine der Einstecköffnungen 60 eingesteckt ist. Die übrigen Ableiter 52, 58 sind in Fig. 3 demgegenüber noch nicht durch das Rührreibschweißen mit dem Zellverbinder 54 verschweißt.

Aufgrund des Einsteckens der Endbereiche der Ableiter 52, 58 in die jeweiligen Einstecköffnungen 60 des Zellverbinders 54 braucht zum Parallelschalten der Batteriezellen 50 beziehungsweise zum Parallelschalten der Batteriezellen 56 und auch zum In-Reihe-Schalten der Gruppe der Batteriezellen 50 mit der Gruppe der Batteriezellen 56 keiner der Ableiter 52, 58 und auch nicht der Zellverbinder 54 umgebogen zu werden. Es entfallen somit zusätzliche Arbeitsschritte und die mit dem Biegeprozess einhergehenden Herausforderungen, welche mit Bezug auf Fig. 1 beschrieben wurden.

Da ein Aufstapeln der Ableiter 52, 58 entfällt, kann zudem der unterhalb des Zellverbinders 54 zur Verfügung stehende Bauraum optimal für das elektrochemisch aktive Material der Batteriezellen 50, 56 genutzt werden. Dementsprechend weist die Batterie 48 gemäß Fig. 2 einen Leistungsgewinn gegenüber einer Batterie mit Batteriezellen auf, welche jeweils weniger elektrochemisch aktives Material enthalten.

Das mit Bezug auf Fig. 2 und Fig. 3 beschriebene Fügekonzept eignet sich im Zusammenhang mit dem Fügeverfahren des Rührreibschweißens insbesondere für das Parallelschalten von wenigstens zwei Batteriezellen 50, 56. Die Anzahl der parallel zu verschaltenden Batteriezellen 50, 56 lässt sich entsprechend der an die Batterie 48 gestellten Anforderungen beliebig erweitern. Des Weiteren können, wie vorliegend beispielhaft gezeigt, die parallel geschalteten Batteriezellen 50 mit den weiteren parallel geschalteten Batteriezellen 56 zusätzlich elektrisch in Reihe geschaltet werden.

Fig. 4 zeigt schematisch einen ersten Schritt beim Durchführen des Rührreibschweißens mit dem Werkzeug 62. Hierbei taucht zunächst der rotierende Stift 64 des Werkzeugs 62 bei rotierendem Werkzeug 62 in den Ableiter 52 ein, bis die Werkzeugschulter 66 in Anlage mit einer Oberseite 82 des Zellverbinders 54 gerät. Ebenso kann der rotierende Stift 64 in einen Spalt 70 eingeführt werden, welcher zwischen dem Endbereich des Ableiters 52 und einer die Einstecköffnung 60 begrenzenden Wandung 72 der Einstecköffnung 60 ausgebildet ist (vergleiche Fig. 3). In den Fig. ist der Stift 64 lediglich schematisch und nicht mit seinem tatsächlichen, deutlich geringeren Durchmesser gezeigt.

In einer in Fig. 4 gezeigten Draufsicht auf den Zellverbinder 54 veranschaulicht ein Symbol 74 das Eintauchen des Stifts 64 in den Ableiter 52 beziehungsweise in den Spalt 70. Dies geschieht, bis die Werkzeugschulter 66 an der Oberseite 82 des Zellverbinders 54 anliegt. Wenn dann die Werkstoffe des Zellverbinders 54 und des jeweiligen Ableiters 52, 58 soweit erwärmt sind, dass eine Plastifizierung und somit eine Vermischung der Materialien der Werkstoffe stattfindet, findet der Vorschub des rotierenden Stifts 64 entlang der Einstecköffnung 60 statt. Dieser Vorschub ist in Fig. 4 durch einen Pfeil 76 veranschaulicht.

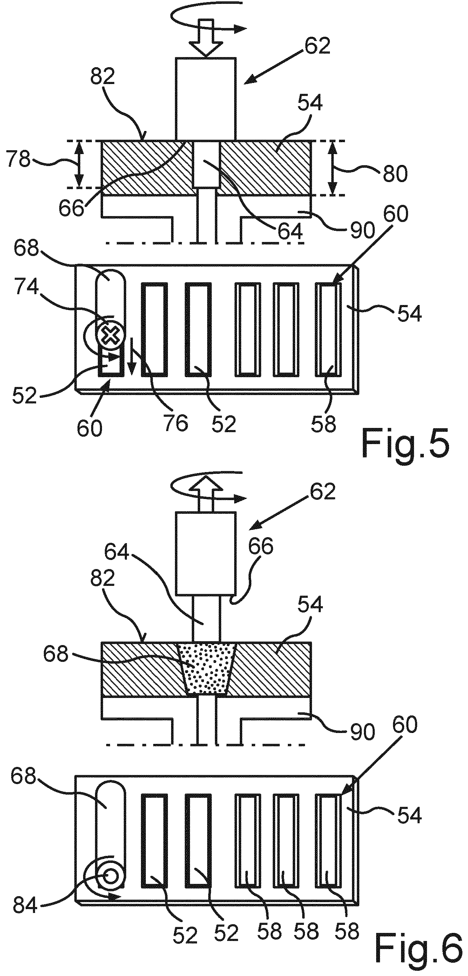

In Fig. 5 ist gezeigt, wie der Stift 64 nach dem Eintauchen in den Zellverbinder 54 im Bereich der Einstecköffnung 60 in diese Vorschubrichtung vorwärts bewegt wird. Hierbei liegt die Werkzeugschulter 66 weiterhin an der Oberseite 82 des Zellverbinders 54 an. Bevorzugt ist eine Eintauchtiefe 78 des Stifts 64 in den Zellverbinder 54 geringer als eine Dicke 80 des Zellverbinders 54. Aus der Draufsicht in Fig. 5 ist ersichtlich, wie durch das Entlangbewegen des rotierenden Werkzeugs 62 entlang der Einstecköffnung 60 in die durch den Pfeil 76 angegebene Vorschubrichtung die Schweißnaht 68 gebildet wird.

In Fig. 6 ist gezeigt, wie der rotierende Stift 64 wieder aus dem Bereich der Einstecköffnung 60 des Zellverbinders 54 herausgezogen wird. Ein entsprechendes Symbol 84 in der Draufsicht auf den Zellverbinder 54 in Fig. 6 veranschaulicht das Ausfahren des Werkzeugs 62. Dementsprechend entfernt sich die rotierende Werkzeugschulter 66 wieder von der Oberseite 82 des Zellverbinders 54.

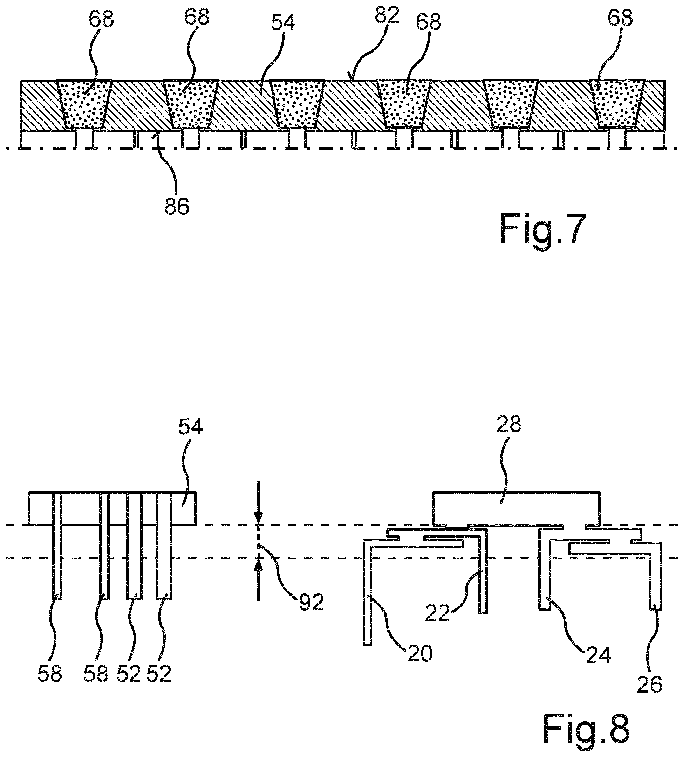

Der für den Endbereich des Ableiters 52 einer ersten der Batteriezellen 50 anhand von Fig. 4 bis Fig. 6 veranschaulichte Vorgang wird dann für die Endbereiche der weiteren Ableiter 52, 58 der weiteren Batteriezellen 50, 56 wiederholt. Dementsprechend werden in dem Zellverbinder 54 die in Fig. 7 schematisch gezeigten Fügestellen beziehungsweise Schweißnähte 68 in den Bereichen der Einstecköffnungen 60 ausgebildet. Zu einer Unterseite 86 des Zellverbinders 54 hin können die Schweißnähte 68 eine geringere Breite aufweisen als im Bereich der Oberseite 82 des Zellverbinders 54.

Des Weiteren kann durch das mittels des Rührreibschweißens bewirkte Verbinden der Endbereiche der Ableiter 52, 58 mit dem Zellverbinder 54 eine Bildung von intermetallischen Phasen besonders weitgehend vermieden werden, selbst wenn wie vorliegend beispielhaft gezeigt die Endbereiche der aus Kupfer gebildeten Ableiter 58 mit dem aus Aluminium gebildeten Zellverbinder 54 durch das Rührreibschweißen verbunden werden.

In Fig. 2 sind des Weiteren Gehäuse beziehungsweise Zellrahmen 88 der jeweiligen Batteriezellen 50, 56 schematisch gezeigt. Je nach Gestaltung dieser Zellrahmen 88 können diese als Widerlager genutzt werden, welche die beim Rührreibschweißen auf den Zellverbinder 54 aufgebrachte Kraft abstützen.

Es kann jedoch auch vorgesehen sein, dass zwischen die Zellrahmen 88 und die Unterseite 86 des Zellverbinders 54 während des Rührreibschweißens Stützeinrichtungen 90 (vergleiche Fig. 4) eingebracht werden. Diese nach Art von Ambossen ausgebildeten Stützeinrichtungen 90 stützen dann die beim Rührreibschweißen auf den Zellverbinder 54 aufgebrachte Kraft ab.

Je nachdem, wie der Zellrahmen 88 gestaltet ist, kann auch die Lage des Werkzeugs 62 so gewählt werden, dass durch den Zellrahmen 88 die Kraft von unten sicher abgestützt werden kann. Mit anderen Worten kann also das Werkzeug 62 mit einem gewissen Offset oder Versatz in einem Bereich des Gehäuses beziehungsweise Zellrahmens 88 platziert werden, in welchem der Zellrahmen 88 stabiler ist als in einem an diesen Bereich angrenzenden Bereich des Zellrahmens 88. Dann kann gegebenenfalls auf das Vorsehen der Stützeinrichtungen 90 verzichtet werden.

Des Weiteren ist eine derartige Vorgehensweise vorteilhaft, wenn zwischen der Unterseite 86 des Zellverbinders 54 und den Zellrahmen 88 kein Platz zum Einbringen von Stützeinrichtungen 90 ist.

Anhand von Fig. 8 lässt sich ein Bauraumgewinn 92 veranschaulichen, welcher durch Verwendung des die Einstecköffnungen 60 aufweisenden Zellverbinders 54 und das vorstehend beschriebene Rührreibschweißen zum Verbinden desselben mit den Endbereichen der jeweiligen Ableiter 52, 58 realisiert werden kann.

Denn die in Fig. 8 den Bauraumgewinn 92 angebende Höhe wird gemäß der in Fig. 8 gezeigten Darstellung benötigt, wenn wie mit Bezug auf Fig. 1 erläutert, die Ableiter 20, 22 beziehungsweise die Ableiter 24, 26 umgebogen und übereinander gelegt beziehungsweise aufeinander gestapelt werden. Das Umbiegen und Aufeinanderstapeln der Ableiter 20, 22, 24, 26 geht also mit einem Verlust an Bauraum in die Stapelrichtung einher. Dies wird vorliegend vermieden, sodass durch den Verzicht auf das Umbiegen der Bauraumgewinn 92 erhalten wird. Der Zellverbinder 54 gemäß Fig. 8 weist demgegenüber dieselbe Dicke auf wie der in Fig. 1 in der rechten Darstellung und in Fig. 8 nochmals gezeigte Zellverbinder 28.

### Bezugszeichenliste

- 10: Batterie
- 12: Batteriezelle
- 14: Batteriezelle
- 16: Batteriezelle
- 18: Batteriezelle
- 20: Ableiter
- 22: Ableiter
- 24: Ableiter
- 26: Ableiter
- 28: Zellverbinder
- 30: Symbole
- 32: Ableiter
- 34: Batteriezelle
- 36: Ableiter
- 38: Batteriezelle
- 40: Schenkel
- 42: Schenkel
- 44: Zellverbinder
- 46: Ultraschallwerkzeug
- 48: Batterie
- 50: Batteriezelle
- 52: Ableiter
- 54: Zellverbinder
- 56: Batteriezelle
- 58: Ableiter
- 60: Einstecköffnung
- 62: Werkzeug
- 64: Stift
- 66: Werkzeugschulter
- 68: Schweißnaht
- 70: Spalt
- 72: Wandung
- 74: Symbol
- 76: Pfeil
- 78: Eintauchtiefe
- 80: Dicke
- 82: Oberseite
- 84: Symbol
- 86: Unterseite
- 88: Zellrahmen
- 90: Stützeinrichtung
- 92: Bauraumgewinn

## Patentansprüche

1. Verfahren zum Herstellen einer Batterie (48) mit einer Mehrzahl von Batteriezellen (50 56), bei welchem jeweilige Ableiter (52, 58) der Batteriezellen (50, 56), durch welche elektrische Anschlüsse der jeweiligen Batteriezelle (50, 56) bereitgestellt werden, durch Schweißen mit einem Zellverbinder (54) der Batterie (48) elektrisch leitend verbunden werden,
wobei der Zellverbinder (54) jeweilige Einstecköffnungen (60) aufweist, in welche jeweilige Endbereiche der Ableiter (52, 58) eingesteckt werden, wobei die Endbereiche der Ableiter (52, 58) mit dem Zellverbinder (54) durch Rührreibschweißen verbunden werden
**dadurch gekennzeichnet, dass**
die Einstecköffnungen (60) des Zellverbinders (54) als Durchtrittsöffnungen ausgebildet sind, in welche von einer ersten Seite (86) des Zellverbinders (54) her die jeweiligen Endbereiche der Ableiter (52, 58) eingesteckt werden, wobei beim Verbinden der Endbereiche der Ableiter (52, 58) mit dem Zellverbinder (54) ein rotierender Stift (64) eines für das Rührreibschweißen verwendeten Werkzeugs (62) von einer der ersten Seite (86) gegenüberliegenden zweiten Seite (82) des Zellverbinders (54) her in die jeweilige Durchtrittsöffnung eingebracht wird, wobei sowohl die Endbereiche der Ableiter (52, 58) als auch die Einstecköffnungen (60) nach Art von schmalen Rechtecken ausgebildete Querschnitte aufweisen, wobei der rotierende Stift (64) entlang der schlitzförmigen Einstecköffnung (60) bewegt wird, sodass über die gesamte Länge der Einstecköffnung (60) durch das Rührreibschweißen eine Schweißnaht (68) ausgebildet wird.

2. Verfahren nach Anspruch 1,
**dadurch gekennzeichnet, dass**
während des Rührreibschweißens der rotierende Stift (64) des für das Rührreibschweißen verwendeten Werkzeugs (62) in den Endbereich des jeweiligen Ableiters (52, 58) und/oder in einen Spalt (70) eingeführt wird, welcher zwischen dem Endbereich des jeweiligen Ableiters (52, 58) und einer die Einstecköffnung (60) begrenzenden Wandung (72) des Zellverbinders (54) ausgebildet ist, bis eine Werkzeugschulter (66) des Werkzeugs (62) an einer Oberseite (82) des Zellverbinders (54) anliegt.

3. Verfahren nach Anspruch 2,
**dadurch gekennzeichnet, dass**
eine Eintauchtiefe (78) des rotierenden Stifts (64) in die Einstecköffnung (60) geringer ist als eine Dicke (80) des Zellverbinders (54) in Richtung der Eintauchtiefe (78), insbesondere die Eintauchtiefe (78) mehr als 90 Prozent der Dicke (80), insbesondere etwa 95 Prozent der Dicke (80) beträgt.

4. Verfahren nach einem der Ansprüche 1 bis 3,
**dadurch gekennzeichnet, dass**
mittels eines für das Rührreibschweißen verwendeten Werkzeugs (62) eine Kraft in einem Bereich auf den Zellverbinder (54) aufgebracht wird, in welchem ein den Zellverbinder (54) kontaktierendes Gehäuse (88) der Batteriezelle (50, 56) stabiler ausgebildet ist als in einem an diesen Bereich angrenzenden Bereich des Gehäuses (88) und/oder während des Rührreibschweißens zwischen den Zellverbinder (54) und ein Gehäuse (88) der Batteriezelle (50, 56) eine Stützeinrichtung (90) eingebracht wird, welche eine beim Rührreibschweißen auf den Zellverbinder (54) aufgebrachte Kraft zumindest teilweise abstützt.

5. Batterie mit einer Mehrzahl von Batteriezellen (50, 56), wobei jeweilige Ableiter (52, 58) der Batteriezellen (50, 56), durch welche elektrische Anschlüsse der jeweiligen Batteriezelle (50, 56) bereitgestellt sind, durch Schweißen mit einem Zellverbinder (54) der Batterie (48) elektrisch leitend verbunden sind,
wobei der Zellverbinder (54) jeweilige Einstecköffnungen (60) aufweist, in welche jeweilige Endbereiche der Ableiter (52, 58) eingesteckt sind, wobei die Endbereiche der Ableiter (52, 58) mit dem Zellverbinder (54) durch Rührreibschweißen verbunden sind,
**dadurch gekennzeichnet, dass**
die Batterie (48) nach einem Verfahren gemäß einem der Ansprüche 1 bis 4 hergestellt ist.

6. Batterie nach Anspruch 5,
**dadurch gekennzeichnet, dass**
wenigstens zwei Batteriezellen (50, 56) der Batterie (48) aufgrund des elektrisch leitenden Verbindens mit dem Zellverbinder (54) parallel geschaltet sind.

7. Batterie nach Anspruch 6,
**dadurch gekennzeichnet, dass**
Gruppen der parallel geschalteten Batteriezellen (50, 56) aufgrund des elektrisch leitenden Verbindens mit dem Zellverbinder (54) in Reihe geschaltet sind.

8. Batterie nach einem der Ansprüche 5 bis 7,
**dadurch gekennzeichnet, dass**
durch ein Gehäuse (88) der jeweiligen Batteriezelle (50, 56) ein Widerlager gebildet ist, durch welches eine beim Rührreibschweißen auf den Zellverbinder (54) aufgebrachte Kraft zumindest teilweise abstützbar ist.

9. Batterie nach einem der Ansprüche 5 bis 8,
**dadurch gekennzeichnet, dass**
eine Eintrittstiefe zumindest eines der Endbereiche in die diesem Endbereich zugeordnete Einstecköffnung (60) geringer ist als eine Dicke (80) des Zellverbinders (54) in Richtung der Eintrittstiefe.

## Claims

1. Method for producing a battery (48) having a plurality of battery cells (50, 56), in which respective current collectors (52, 58) of the battery cells (50, 56), by means of which electrical connections of the relevant battery cell (50, 56) are provided, are electrically conductively connected to a cell connector (54) of the battery (48) by welding,
wherein the cell connector (54) has respective insertion openings (60) into which respective end regions of the current collectors (52, 58) are inserted, wherein the end regions of the current collectors (52, 58) are connected to the cell connector (54) by friction stir welding,
**characterized in that**
the insertion openings (60) of the cell connector (54) are designed as through-openings into which the respective end regions of the current collectors (52, 58) are inserted from a first side (86) of the cell connector (54), wherein, when connecting the end regions of the current collectors (52, 58) to the cell connector (54), a rotating pin (64) of a tool (62) used for the friction stir welding is inserted into the relevant through-opening from a second side (82) of the cell connector (54) opposite the first side (86), wherein the end regions of the current collectors (52, 58) and the insertion openings (60) have cross sections shaped like narrow rectangles, wherein the rotating pin (64) is moved along the slot-shaped insertion opening (60), so that a weld seam (68) is formed over the entire length of the insertion opening (60) by the friction stir welding.

2. Method according to claim 1,
**characterized in that**
during the friction stir welding, the rotating pin (64) of the tool (62) used for the friction stir welding is inserted into the end region of the relevant current collector (52, 58) and/or into a gap (70) formed between the end region of the relevant current collector (52, 58) and a wall (72) of the cell connector (54) that delimits the insertion opening (60), until a tool shoulder (66) of the tool (62) rests against a top side (82) of the cell connector (54).

3. Method according to claim 2,
**characterized in that**
an insertion depth (78) of the rotating pin (64) into the insertion opening (60) is less than a thickness (80) of the cell connector (54) in the direction of the insertion depth (78), in particular the insertion depth (78) is more than 90 percent of the thickness (80), in particular approximately 95 percent of the thickness (80).

4. Method according to any of claims 1 to 3,
**characterized in that**
by means of a tool (62) used for the friction stir welding, a force is applied to the cell connector (54) in a region in which a housing (88) of the battery cell (50, 56) which contacts the cell connector (54) is designed to be more stable than in a region of the housing (88) that is adjacent to this region, and/or a support device (90) is introduced between the cell connector (54) and a housing (88) of the battery cell (50, 56) during the friction stir welding, which support device at least partially supports a force applied to the cell connector (54) during friction stir welding.

5. Battery comprising a plurality of battery cells (50, 56), wherein respective current collectors (52, 58) of the battery cells (50, 56), by means of which electrical connections of the relevant battery cell (50, 56) are provided, are electrically conductively connected to a cell connector (54) of the battery (48) by welding,
wherein the cell connector (54) has respective insertion openings (60) into which respective end regions of the current collectors (52, 58) are inserted, wherein the end regions of the current collectors (52, 58) are connected to the cell connector (54) by friction stir welding,
**characterized in that**
the battery (48) is produced by a method according to any of claims 1 to 4

6. Battery according to claim 5,
**characterized in that**
at least two battery cells (50, 56) of the battery (48) are connected in parallel, due to the electrically conductive connection to the cell connector (54).

7. Battery according to claim 6,
**characterized in that**
groups of the battery cells (50, 56) connected in parallel are connected in series, due to the electrically conductive connection to the cell connector (54).

8. Battery according to any of claims 5 to 7,
**characterized in that**
a housing (88) of the relevant battery cell (50, 56) forms a support, by means of which a force applied to the cell connector (54) during friction stir welding can be at least partially supported.

9. Battery according to any of claims 5 to 8,
**characterized in that**
an entry depth of at least one of the end regions into the insertion opening (60) associated with this end region is less than a thickness (80) of the cell connector (54) in the direction of the entry depth.

## Revendications

1. Procédé pour la fabrication d'une batterie (48) comportant une pluralité d'éléments de batterie (50, 56), dans lequel des déflecteurs (52, 58) respectifs des éléments de batterie (50, 56), au moyen desquels déflecteurs sont fournis des raccords électriques de l'élément de batterie (50, 56) respectif, sont connectés de manière électriquement conductrice à un connecteur d'éléments (54) de la batterie (48) par soudage, dans lequel le connecteur d'éléments (54) présente des ouvertures d'insertion (60) respectives dans lesquelles sont insérées des zones d'extrémité respectives des déflecteurs (52, 58), dans lequel les zones d'extrémité des déflecteurs (52, 58) sont connectées au connecteur d'éléments (54) par soudage par friction-malaxage
**caractérisé en ce que**
les ouvertures d'insertion (60) du connecteur d'éléments (54) sont réalisées en tant qu'ouvertures traversantes dans lesquelles les zones d'extrémité respectives des déflecteurs (52, 58) sont insérées depuis un premier côté (86) du connecteur d'éléments (54), dans lequel, lors de la connexion des zones d'extrémité des déflecteurs (52, 58) avec le connecteur d'éléments (54), une broche rotative (64) d'un outil (62) utilisé pour le soudage par friction-malaxage est insérée dans l'ouverture traversante respective depuis un second côté (82) du connecteur d'éléments (54) opposé au premier côté (86), dans lequel à la fois les zones d'extrémité des déflecteurs (52, 58) et les ouvertures d'insertion (60) présentent des sections transversales réalisées en forme de rectangles étroits, dans lequel la broche rotative (64) est déplacée le long de l'ouverture d'insertion (60) en forme de fente, de sorte qu'un cordon de soudure (68) est réalisé sur toute la longueur de l'ouverture d'insertion (60) par soudage par friction-malaxage.

2. Procédé selon la revendication 1,
**caractérisé en ce que**
lors du soudage par friction-malaxage, la broche rotative (64) de l'outil (62) utilisé pour le soudage par friction-malaxage est introduite dans la zone d'extrémité du déflecteur (52, 58) respectif et/ou dans un interstice (70) réalisé entre la zone d'extrémité du déflecteur (52, 58) respectif et une paroi (72) du connecteur d'éléments (54) délimitant l'ouverture d'insertion (60), jusqu'à ce qu'un épaulement d'outil (66) de l'outil (62) repose contre une face supérieure (82) du connecteur d'éléments (54).

3. Procédé selon la revendication 2,
**caractérisé en ce que**
une profondeur d'enfoncement (78) de la broche rotative (64) dans l'ouverture d'insertion (60) est inférieure à une épaisseur (80) du connecteur d'éléments (54) dans le sens de la profondeur d'enfoncement (78), en particulier, la profondeur d'enfoncement (78) est supérieure à 90 pour cent de l'épaisseur (80), en particulier est d'environ 95 pour cent de l'épaisseur (80).

4. Procédé selon l'une des revendications 1 à 3,
**caractérisé en ce que**
une force est appliquée sur le connecteur d'éléments (54) à l'aide d'un outil (62) utilisé pour le soudage par friction-malaxage dans une zone dans laquelle un boîtier (88) des éléments de batterie (50, 56) en contact avec le connecteur d'éléments (54) est plus robuste que dans une zone du boîtier (88) adjacente à ladite zone et/ou, pendant le soudage par friction-malaxage, un dispositif de soutien (90) est introduit entre le connecteur d'éléments (54) et un boîtier (88) des éléments de batterie (50, 56), lequel dispositif de soutien soutient au moins partiellement une force exercée sur le connecteur d'éléments (54) lors du soudage par friction-malaxage.

5. Batterie comportant une pluralité d'éléments de batterie (50, 56), dans laquelle des déflecteurs (52, 58) respectifs des éléments de batterie (50, 56), au moyen desquels déflecteurs sont fournis des raccords électriques de l'élément de batterie (50, 56) respectif, sont connectés de manière électriquement conductrice à un connecteur d'éléments (54) de la batterie (48) par soudage, dans laquelle le connecteur d'éléments (54) présente des ouvertures d'insertion (60) respectives dans lesquelles sont insérées des zones d'extrémité respectives des déflecteurs (52, 58), dans laquelle les zones d'extrémité des déflecteurs (52, 58) sont connectées au connecteur d'éléments (54) par soudage par friction-malaxage,
**caractérisée en ce que**
la batterie (48) est fabriquée selon un procédé conformément à l'une des revendications 1 à 4.

6. Batterie selon la revendication 5,
**caractérisée en ce que**
au moins deux éléments de batterie (50, 56) de la batterie (48) sont montés en parallèle grâce à la connexion électriquement conductrice avec le connecteur d'éléments (54).

7. Batterie selon la revendication 6,
**caractérisée en ce que**
des groupes d'éléments de batterie (50, 56) montés en parallèle sont montés en série grâce à la connexion électriquement conductrice avec le connecteur d'éléments (54).

8. Batterie selon l'une des revendications 5 à 7,
**caractérisée en ce que**
une butée est formée au moyen d'un boîtier (88) de l'élément de batterie (50, 56) respectif, au moyen de laquelle une force exercée sur le connecteur d'éléments (54) lors du soudage par friction-malaxage peut être au moins partiellement soutenue.

9. Batterie selon l'une des revendications 5 à 8,
**caractérisée en ce que**
une profondeur de pénétration d'au moins l'une des zones d'extrémité dans l'ouverture d'insertion (60) associée à ladite zone d'extrémité est inférieure à une épaisseur (80) du connecteur d'éléments (54) dans le sens de la profondeur de pénétration.
